# EUROPEAN PATENT APPLICATION

(11) **EP 4 640 604 A2**
(43) Date of publication of application: **29.10.2025**
(21) Application number: 25171387.1
(22) Date of filing: 17.04.2025
(51) Int. Cl.: B66B 3/00

(54) **GENERATIVE ARTIFICIAL INTELLIGENCE SYSTEM FOR PASSENGERS**

(30) Priority: 25.04.2024 US 202418645787
(71) Applicant: Otis Elevator Company, Farmington, Connecticut 06032 (US)
(72) Inventor: Ladi, Srinivasarao Rao, 500081 Madhapur, Hyderabad (IN); Miriyala, Srisatya Bramararjuna Phani Pradeep, 500081 Madhapur, Hyderabad (IN); Kiran, Kamarajugadda Mruthyumjaya, 500081 Madhapur, Hyderabad (IN)
(74) Representative: Schmitt-Nilson Schraud Waibel Wohlfrom Patentanwälte Partnerschaft mbB

(57) **Abstract**

An elevator system is provided. The elevator system includes an elevator car including a camera, a view screen and a communication device. In an event a passenger who is mute and deaf is trapped in the elevator car, communications via the communication device are initiated, sign language movements expressed by the passenger are observed by the camera whereupon the sign language movements are translated into messages for an operator and a sign language to which the sign language movements are associated is identified and responses from the operator are displayed to the passenger on the view screen.

## Description

The present disclosure relates to elevator systems and, in particular, to a smart generative artificial intelligence (AI) system for trapped passengers.

In an elevator system, an elevator car travels up and down along the elevator shaft to arrive at landing doors of different floors of a building. The movement of the elevator is driven by a motor that is controlled by a drive according to instructions received from users of the elevator system. Elevator systems can be managed by property owners and/or by third parties. Such management is particularly important during service outages when passengers might be trapped in elevator cars.

When a passenger is trapped in an elevator car, the passenger normally presses an emergency button that notifies an operator of the situation or uses the emergency phone installed in the elevator car. When the passenger is disabled, these options may not be possible or sufficient, however, to address the current needs of the trapped and disabled passenger.

According to an aspect of the disclosure, an elevator system is provided. The elevator system includes an elevator car including a camera, a view screen and a communication device. In an event a passenger who is mute and deaf is trapped in the elevator car, communications via the communication device are initiated, sign language movements expressed by the passenger are observed by the camera whereupon the sign language movements are translated into messages for an operator and a sign language to which the sign language movements are associated is identified and responses from the operator are displayed to the passenger on the view screen.

Particular embodiments further may include at least one, or a plurality of, the following optional features, alone or in combination with each other:

In accordance with additional or alternative embodiments, in the event the passenger who is mute and deaf is trapped in the elevator car, the responses from the operator are displayed as text messages to the passenger on the view screen.

In accordance with additional or alternative embodiments, in the event the passenger who is mute and deaf is trapped in the elevator car, the responses from the operator are translated into sign language movements of the sign language and expressed to the passenger by an avatar displayed on the view screen.

In accordance with additional or alternative embodiments, the camera, the view screen and the communication device are disposed in an interior of the elevator car.

In accordance with additional or alternative embodiments, the camera is provided as one or more elevator car cameras.

In accordance with additional or alternative embodiments, the sign language movements expressed by the passenger are forwarded to a cloud-based artificial intelligence (AI) model and the cloud-based AI model translates the sign language movements expressed by the passenger using all known sign language forms.

In accordance with additional or alternative embodiments, the sign language movements expressed by the passenger are translated into messages for rescue personnel and texted or spoken responses from the rescue personnel are displayed as text messages to the passenger on the view screen and/or are translated into sign language movements of the sign language and expressed to the passenger by the avatar displayed on the view screen.

According to an aspect of the disclosure, a method of operating an elevator system in an event a passenger who is mute and deaf is trapped in an elevator car is provided. The method includes initiating communications between the passenger and an operator, observing sign language movements expressed by the passenger, forwarding the sign language movements to a cloud-based artificial intelligence (AI) model whereupon the sign language movements are translated into messages for the operator and a sign language to which the sign language movements are associated is identified and one or more of displaying responses from the operator as text messages to the passenger and translating responses from the operator into sign language movements of the sign language and expressing, to the passenger by a displayed avatar, the responses from the operator that have been translated into the sign language movements of the sign language.

Particular embodiments further may include at least one, or a plurality of, the following optional features, alone or in combination with each other:

In accordance with additional or alternative embodiments, the cloud-based AI model translates the sign language movements expressed by the passenger using all known sign language forms.

In accordance with additional or alternative embodiments, translating the sign language movements expressed by the passenger into messages for rescue personnel and one or more of displaying texted or spoken responses from the rescue personnel as texts to the passenger and translating texted or spoken responses from the rescue personnel into sign language movements of the sign language and expressing, to the passenger by the displayed avatar, the texted or spoken responses from the rescue personnel that have been translated into the sign language movements of the sign language.

According to an aspect of the disclosure, an elevator system is provided and includes an elevator car including a camera, a view screen, a haptic interface and a communication device. In an event a passenger who is disabled is trapped in the elevator car communications via the communication device are initiated, movements by the passenger are observed by the camera whereupon the movements are analyzed, a disability of the passenger is identified from results of the analysis of the movements by the passenger, a mode of communication between an operator and the passenger is determined based on the disability and initiated and the mode of communication is executed between the operator and the passenger and vice versa via at least a subset of the camera, the view screen, the haptic interface and the communication device.

Particular embodiments further may include at least one, or a plurality of, the following optional features, alone or in combination with each other:

In accordance with additional or alternative embodiments, the camera, the view screen, the haptic interface and the communication device are disposed in an interior of the elevator car.

In accordance with additional or alternative embodiments, the camera is provided as one or more elevator car cameras.

In accordance with additional or alternative embodiments, the view screen includes one or more of a video display and a speaker.

In accordance with additional or alternative embodiments, the haptic interface includes a braille generator.

In accordance with additional or alternative embodiments, in an event the passenger is mute and deaf and is trapped in the elevator car, communications via the communication device are initiated, sign language movements expressed by the passenger are observed by the camera whereupon the sign language movements are translated into messages for an operator and a sign language to which the sign language movements are associated is identified and one or more of responses from the operator are displayed as texts to the passenger on the view screen and responses from the operator are translated into sign language movements of the sign language and expressed to the passenger by an avatar displayed on the view screen.

In accordance with additional or alternative embodiments, the sign language movements expressed by the passenger are forwarded to a cloud-based artificial intelligence (AI) model.

In accordance with additional or alternative embodiments, the AI model translates the sign language movements expressed by the passenger using all known sign language forms.

In accordance with additional or alternative embodiments, the messages for the operator and the responses from the operator are texts.

In accordance with additional or alternative embodiments, the sign language movements expressed by the passenger are translated into texts for rescue personnel and one or more of texted or spoken responses from the rescue personnel are displayed as texts to the passenger on the view screen and texted or spoken responses from the rescue personnel are translated into sign language movements of the sign language and expressed to the passenger by the avatar displayed on the view screen.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2A is a schematic diagram illustrating an elevator system in accordance with embodiments;
FIG. 2B is a schematic diagram of a view screen with a video display and an avatar of the elevator system of FIG. 2A in accordance with embodiments;
FIG. 2C is a schematic diagram of a haptic interface with a braille generator of the elevator system of FIG. 2A in accordance with embodiments;
FIG. 3 is a flow diagram illustrating a method of operating an elevator system in an event that a passenger who is mute and deaf is trapped in accordance with embodiments; and
FIG. 4 is a flow diagram illustrating a method of operating an elevator system in an event that a passenger with an initially indeterminate disability is trapped in accordance with embodiments.

A line call may be initiated when persons are struck in an elevator car. In some cases, such as those in which passengers who are deaf and/or cannot speak, the passenger may be unable to express his situation and follow the response from the operator on the other end of the call. The operator, in the meantime, may not be able to communicate using sign language. This situation can prevent helpful information from being communicated to the passenger.

Thus, as will be described below, when a line connection is established and a passenger cannot respond to the operator despite because the passenger is mute and/or deaf, the operator can initiate a sign language-based communication scenario. In such a scenario, elevator car cameras will capture the sign language of the passenger and stream the gestures to a cloud-based AI model. The cloud-based AI model will attempt to convert signs to text using all known sign languages by identifying the sign language used by the passenger and then making the appropriate sign-to-text conversions. The text is then displayed to the operator who can now send a response by typing textual responses which will then be displayed in textual form and/or translated to the "identified sign language" and streamed via avatar on a view screen in the elevator car. The communication continues like this until a rescue personnel is dispatched. The rescue personnel are also notified of the situation and shared with basic gestures to use during rescue.

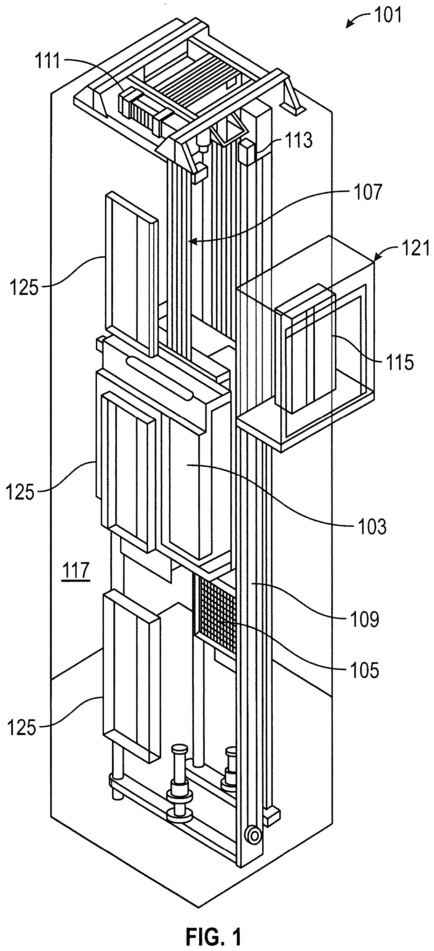

With reference to FIG. 1, which is a perspective view of an elevator system 101, the elevator system 101 includes an elevator car 103, a counterweight 105, a tension member 107, a guide rail 109, a motor 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the motor 111, which is part of an overhead structure of the elevator system 101. The motor 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the motor 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the motor 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The motor 111 may include a motor or similar driving mechanism. In accordance with embodiments of the disclosure, the motor 111 is configured to include an electrically driven motor. The power supply for the motor is a variable speed drive, which may be commonly referred to as a drive. The motor 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

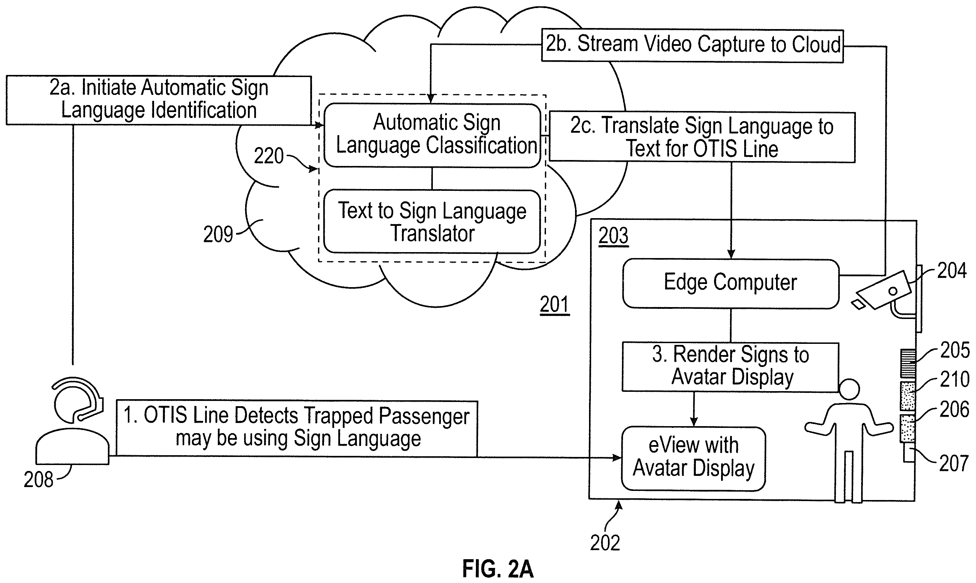

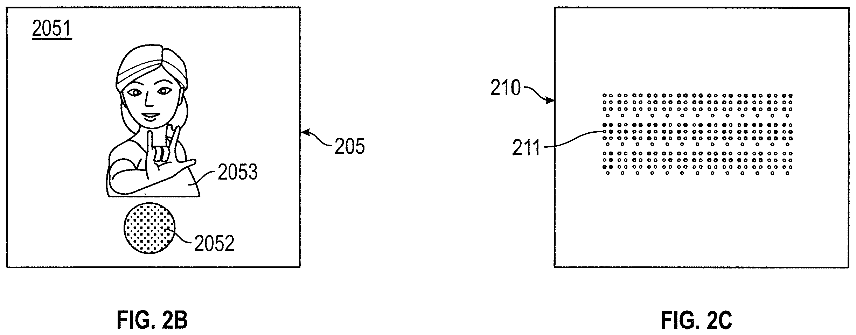

With continued reference to FIG. 1 and with additional reference to FIGS. 2A, 2B and 2C, an elevator system 201 is provided for use with the elevator system 101 of FIG. 1 for example. The elevator system 201 includes an elevator car 202, such as the elevator car 103 of FIG. 1. The elevator car 202 includes a body defining an interior 203, a camera 204, a view screen 205 and a communication device 206. The elevator car 202 may further include a device 207, such as one or more buttons, for initiating communications with an operator 208 via the communication device 206 and over a network 209. The network 209 can be a dedicated network for elevator system emergencies. The elevator car 202 can further include a haptic interface 210, such as a braille generator 211 (see FIG. 2C), proximate to the view screen 205.

The camera 204 may be provided as one or more cameras 204 deployed in multiple locations to establish a combined field-of-view (FOV) that covers a substantial entirety of the interior 203 of the elevator car 202. The view screen 205 can include one or more of a video display 2051 and a speaker 2052 (see FIG. 2B). The camera(s) 204, the view screen 205, the communication device 206 and the haptic interface 210 (where applicable) are all disposed in the interior 203 of the elevator car 202 and accessible to the passenger.

In an event that a passenger who is mute and/or deaf is trapped in the elevator car 202, the following actions are taken. Initially, communications via the communication device 206 are initiated by the passenger actuating the device 207 or by the elevator system 202 determining from contextual clues that a trapped passenger incident is in effect (i.e., by the controller 115 of FIG. 1 determining that the elevator car 202 is stuck between floors or hasn't opened its doors in an unusually long time and is occupied from, for example, a weight reading of the elevator car 102). Next, sign language movements that are expressed by the passenger are observed by the camera 204. A processor coupled to the camera 204 or provided in the controller 115 or the controller 115 itself can analyze movements by the passenger to determine that they are in fact sign language movements. This can be done by the processor being programmed to recognize certain patterns in the movements of the passenger as sign language movements or being programmed to recognize certain movements by the passenger as being common sign language movements that the processor can differentiate from other types of movements by the passenger. In an event the processor determines that the movements by the passenger are sign language movements, the sign language movements are forwarded to a cloud-based artificial intelligence (AI) model 220 via the communication device 206 and over the network 209. The cloud-based AI model 220 may have access to or may learn via deep learning algorithms all known sign language forms. The sign language movements are then translated by the cloud-based AI model 220 into messages, such as texts or typed/textual messages, for the operator 208 and a sign language to which the sign language movements are associated is identified by the cloud-based AI model 220. Responses, such as texts or typed/textual messages, from the operator 208 are then translated into sign language movements of the identified sign language. The responses that have been translated into the sign language movements of the identified sign language can be expressed to the passenger by an avatar 2053 (see FIG. 2B) displayed on the view screen 205.

In accordance with further embodiments, the sign language movements expressed by the passenger can also be translated into messages for rescue personnel 230 and typed/texted or spoken responses from the rescue personnel 230 can be translated into sign language movements of the sign language and expressed to the passenger by the avatar 2053 displayed on the view screen 205.

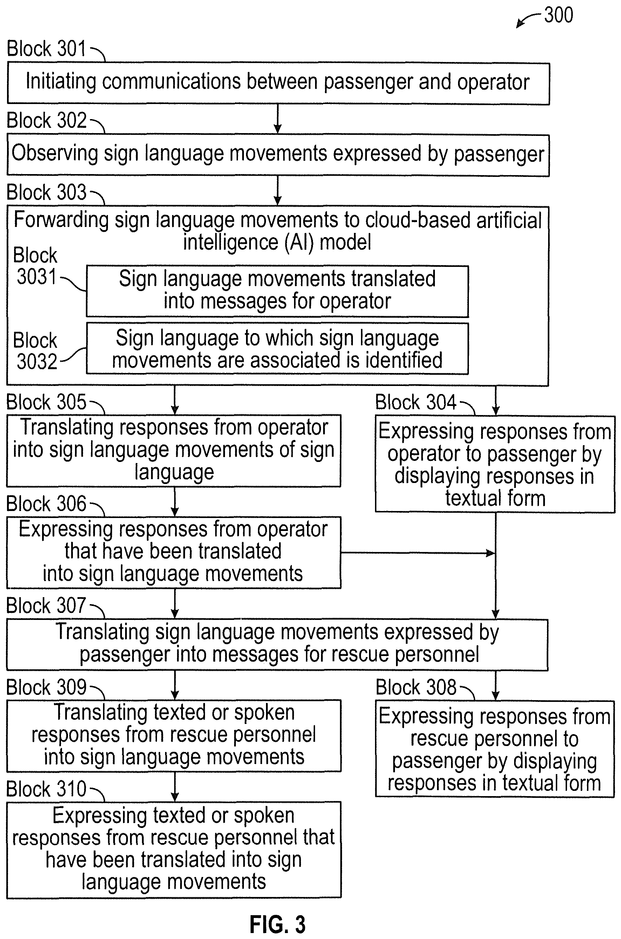

With reference to FIG. 3, a method 300 of operating an elevator system, such as the elevator system 201 of FIGS. 2A, 2B and 2C and/or the elevator system 101 of FIG. 1, is provided. In an event a passenger who is mute and/or deaf is trapped in an elevator car, such as the elevator car 202 of FIGS. 2A, 2B and 2C and/or the elevator car 103 of FIG. 1, the method 300 includes initiating communications between the passenger and an operator (block 301), observing sign language movements expressed by the passenger (block 302), forwarding the sign language movements to a cloud-based artificial intelligence (AI) model (block 303). The sign language movements are translated into messages (i.e., text or audio messages) for the operator (block 3031) and a sign language to which the sign language movements are associated is identified (block 3032) by the cloud-based AI model having access to or learning via deep learning algorithms all known sign language forms (i.e., via sign language detection and sign-to-text/text-to-sign algorithms). The method 300 further includes expressing responses from the operator to the passenger by displaying those responses in textual form (block 304). Additionally or alternatively, the method can include translating responses from the operator into sign language movements of the sign language (block 305) and expressing, to the passenger by a displayed avatar, the responses from the operator that have been translated into the sign language movements of the sign language (block 306).

In accordance with further embodiments, the method 300 can further include translating the sign language movements expressed by the passenger into messages for rescue personnel (block 307) and expressing responses from the rescue personnel to the passenger by displaying those responses in textual form (block 308) and/or translating texted or spoken responses from the rescue personnel into sign language movements of the sign language (block 309) and expressing, to the passenger by the displayed avatar, the texted or spoken responses from the rescue personnel that have been translated into the sign language movements of the sign language (block 310).

With reference back to FIGS. 2A, 2B and 2C, it is to be understood that the elevator system 201 can be used in a case in which the passenger has a disability that is at least initially indeterminate. In this instance, in the event a passenger who is indeterminately disabled is trapped in the elevator car, the following actions are taken. Initially, communications via the communication device 206 are initiated. Movements by the passenger are observed by the camera 204 and forwarded to the cloud-based AI model 220 whereupon the movements are analyzed and the disability of the passenger is identified from results of the analysis. The cloud-based AI model 220 analyzes the movements and the disability of the passenger by being trained to, for example, recognize certain movements by the passenger as being likely to be indicative of certain sign languages. That is, if multiple sign languages have similar those not necessarily the same movements for "help" or "I'm trapped!," the cloud-based AI model 220 can be trained to recognize all of those movements as a sign for help or as a sign for being trapped. The cloud-based AI model 220 can be further trained to recognize the sign language used by the passenger from the recognized signs. For example, if the "help" sign for one sign language differs from the "help sign for another sign language, the cloud-based AI model 220 can identify the passenger's preferred sign language from the sign h/she uses for "help."

A mode of communication between the operator 208 and the passenger is then determined based on the disability and initiated. For example, in the event that the passenger is mute and/or deaf, the mode of communication is a sign language expressed by the passenger and observed by the camera 204 with responses from the operator displayed as text messages to the passenger and/or translated into sign language movements that are expressed to the passenger by the avatar 2051 displayed on the view screen 205 (i.e., as described above with reference to FIGS. 2A, 2B and 2C and to FIG. 3). As an alternative example, in the event that the passenger is blind, the mode of communication is vocalizations expressed by the passenger and received through the communication device 206 with responses from the operator expressed to the passenger via the speaker 2052 and/or translated into braille that are expressed to the passenger via the haptic interface 210. The mode of communication is then executed between the operator 208 and the passenger and vice versa via at least a subset of the camera 204, the view screen 205, the haptic interface 210 and the communication device 206.

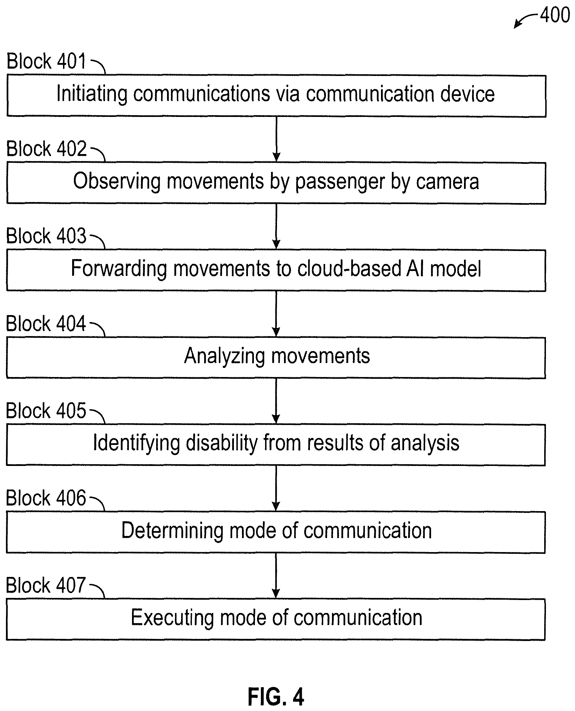

With reference to FIG. 4, a method 400 of operating an elevator system, such as the elevator system 201 of FIGS. 2A, 2B and 2C and/or the elevator system 101 of FIG. 1, is provided in an event a passenger with an initially indeterminate disability is trapped in an elevator car, such as the elevator car 202 of FIGS. 2A, 2B and 2C and/or the elevator car 103 of FIG. 1. As shown in FIG. 4, the method 400 includes initiating communications via a communication device (block 401), observing movements by the passenger by a camera (block 402), identifying those movements as sign language movements as described above, and then forwarding the movements to a cloud-based AI model (block 403). The movements are then analyzed by the cloud-based AI model having access to or learning via deep learning algorithms using all known movement types by disabled persons (block 404) and a disability of the passenger is identified from results of the analysis of the movements by the passenger (block 405). The disability of the passenger can be determined in a similar manner as described above. For example, a passenger using sign language would be indicative of the passenger being deaf. Moreover, a passenger being unwilling to use a phone to communicate would be indicative of the passenger being mute. Thus, a passenger who is using sign language and who is not using a telephone could be viewed as deaf and mute. A mode of communication between an operator and the passenger is then determined based on the disability and initiated (block 406) and the mode of communication is executed between the operator and the passenger and vice versa via at least a subset of the camera, the view screen, the haptic interface and the communication device (block 407).

In the exemplary case of the trapped passenger being determined to be mute and deaf, the method 400 of FIG. 4 can be combined with the method 300 of FIG. 3. That is, the mode of communication can be determined in block 406 of FIG. 5 to be sign detection and/or sign-to-text/text-to-sign and the initiating of communications between the passenger and the operator of block 301 of FIG. 3 and the observing of the sign language movements expressed by the passenger of block 302 of FIG. 3 can be executed in accordance with the mode of communication being executed of block 407 of FIG. 4.

Technical effects and benefits of the present disclosure are the provision of an elevator system capable of smart generative AI for communication with trapped passengers. This will serve to improve passenger safety, improve trapped passenger experiences and is adaptable to latest technological trends.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. An elevator system, comprising:
an elevator car comprising a camera, a view screen and a communication device,
wherein, in an event a passenger who is mute and deaf is trapped in the elevator car:
communications via the communication device are initiated,
sign language movements expressed by the passenger are observed by the camera whereupon the sign language movements are translated into messages for an operator and a sign language to which the sign language movements are associated is identified, and
responses from the operator are displayed to the passenger on the view screen.

2. The elevator system according to claim 1, wherein, in the event the passenger who is mute and deaf is trapped in the elevator car, the responses from the operator are displayed as text messages to the passenger on the view screen.

3. The elevator system according to claim 1 or 2, wherein, in the event the passenger who is mute and deaf is trapped in the elevator car, the responses from the operator are translated into sign language movements of the sign language and expressed to the passenger by an avatar displayed on the view screen.

4. The elevator system according to any of claims 1 to 3, wherein the camera, the view screen and the communication device are disposed in an interior of the elevator car.

5. The elevator system according to any of claims 1 to 4, wherein the camera is provided as one or more elevator car cameras.

6. The elevator system according to any of claims 1 to 5, wherein:
the sign language movements expressed by the passenger are forwarded to a cloud-based artificial intelligence (AI) model, and
the cloud-based AI model translates the sign language movements expressed by the passenger using all known sign language forms.

7. The elevator system according to any of claims 1 to 6, wherein:
the sign language movements expressed by the passenger are translated into messages for rescue personnel, and
texted or spoken responses from the rescue personnel are displayed as text messages to the passenger on the view screen and/or are translated into sign language movements of the sign language and expressed to the passenger by the avatar displayed on the view screen.

8. A method of operating an elevator system in an event a passenger who is mute and deaf is trapped in an elevator car, the method comprising:
initiating communications between the passenger and an operator;
observing sign language movements expressed by the passenger;
forwarding the sign language movements to a cloud-based artificial intelligence (AI) model whereupon the sign language movements are translated into messages for the operator and a sign language to which the sign language movements are associated is identified; and one or more of:
displaying responses from the operator as text messages to the passenger; and
translating responses from the operator into sign language movements of the sign language and expressing, to the passenger by a displayed avatar, the responses from the operator that have been translated into the sign language movements of the sign language.

9. The method according to claim 8, wherein the cloud-based AI model translates the sign language movements expressed by the passenger using all known sign language forms.

10. The method according to claim 8 or 9, further comprising:
translating the sign language movements expressed by the passenger into messages for rescue personnel; and one or more of:
displaying texted or spoken responses from the rescue personnel as texts to the passenger; and
translating texted or spoken responses from the rescue personnel into sign language movements of the sign language and expressing, to the passenger by the displayed avatar, the texted or spoken responses from the rescue personnel that have been translated into the sign language movements of the sign language.

11. An elevator system, comprising:
an elevator car comprising a camera, a view screen, a haptic interface and a communication device,
wherein, in an event a passenger who is disabled is trapped in the elevator car:
communications via the communication device are initiated,
movements by the passenger are observed by the camera whereupon the movements are analyzed,
a disability of the passenger is identified from results of the analysis of the movements by the passenger,
a mode of communication between an operator and the passenger is determined based on the disability and initiated, and
the mode of communication is executed between the operator and the passenger and vice versa via at least a subset of the camera, the view screen, the haptic interface and the communication device.

12. The elevator system according to claim 11, wherein the camera, the view screen, the haptic interface and the communication device are disposed in an interior of the elevator car; and/or
wherein the camera is provided as one or more elevator car cameras; and/or
wherein the view screen comprises one or more of a video display and a speaker; and/or
wherein the haptic interface comprises a braille generator.

13. The elevator system according to claim 11 or 12, wherein, in an event the passenger is mute and deaf and is trapped in the elevator car:
communications via the communication device are initiated,
sign language movements expressed by the passenger are observed by the camera whereupon the sign language movements are translated into messages for an operator and a sign language to which the sign language movements are associated is identified, and one or more of:
responses from the operator are displayed as texts to the passenger on the view screen; and
responses from the operator are translated into sign language movements of the sign language and expressed to the passenger by an avatar displayed on the view screen.

14. The elevator system according to claim 13, wherein the sign language movements expressed by the passenger are forwarded to a cloud-based artificial intelligence (AI) model; and/or
wherein the AI model translates the sign language movements expressed by the passenger using all known sign language forms.

15. The elevator system according to claim 13 or 14, wherein the messages for the operator and the responses from the operator are texts; and/or
wherein:
the sign language movements expressed by the passenger are translated into texts for rescue personnel, and one or more of:
texted or spoken responses from the rescue personnel are displayed as texts to the passenger on the view screen; and
texted or spoken responses from the rescue personnel are translated into sign language movements of the sign language and expressed to the passenger by the avatar displayed on the view screen.
